(19) Europäisches Patentamt / European Patent Office / Office européen des brevets

(11) **EP 4 404 213 B1**

(12) **EUROPEAN PATENT SPECIFICATION**

(45) Date of publication and mention
of the grant of the patent:
**22.04.2026 Bulletin 2026/17**

(21) Application number: **22869759.5**

(22) Date of filing: **22.08.2022**

(51) International Patent Classification (IPC):
*G16Z 99/00* (2019.01)   *G06F 17/18* (2006.01)
*G06F 30/20* (2020.01)   *G06Q 10/04* (2023.01)
*G06N 20/00* (2019.01)   *G06Q 10/067* (2023.01)
*G06Q 10/101* (2023.01)   *G06F 30/23* (2020.01)
*G06F 30/25* (2020.01)   *G06F 111/10* (2020.01)
*G06F 113/10* (2020.01)   *G06F 113/24* (2020.01)
*G06F 119/14* (2020.01)   *G06N 7/01* (2023.01)
*G06F 111/08* (2020.01)

(52) Cooperative Patent Classification (CPC):
**G06Q 10/04; G06F 17/18; G06F 30/20;
G06F 30/23; G06F 30/25; G06N 7/01; G06N 20/00;
G06Q 10/067; G06Q 10/101;** G06F 2111/08;
G06F 2111/10; G06F 2113/10; G06F 2113/24;
G06F 2119/14

(86) International application number:
**PCT/JP2022/031628**

(87) International publication number:
**WO 2023/042612 (23.03.2023 Gazette 2023/12)**

(54) **DATA ASSIMILATION DEVICE, DATA ASSIMILATION METHOD, DATA ASSIMILATION
PROGRAM, AND DATA ASSIMILATION SYSTEM**

DATENASSIMILATIONSVORRICHTUNG, DATENASSIMILATIONSVERFAHREN,
DATENASSIMILATIONSPROGRAMM UND DATENASSIMILATIONSSYSTEM

DISPOSITIF D'ASSIMILATION DE DONNÉES, PROCÉDÉ D'ASSIMILATION DE DONNÉES,
PROGRAMME D'ASSIMILATION DE DONNÉES ET SYSTÈME D'ASSIMILATION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.09.2021 JP 2021150483**

(43) Date of publication of application:
**24.07.2024 Bulletin 2024/30**

(73) Proprietor: **National University Corporation
Tokyo University Of Agriculture and Technology
Fuchu-shi
Tokyo 183-8538 (JP)**

(72) Inventors:
• **YAMANAKA, Akinori
  Fuchu-shi, Tokyo 183-8538 (JP)**
• **ISHII, Akimitsu
  Fuchu-shi, Tokyo 183-8538 (JP)**

(74) Representative: **V.O.
P.O. Box 87930
2508 DH Den Haag (NL)**

(56) References cited:
**JP-A- 2008 241 433   JP-A- 2014 026 440
JP-A- 2014 119 351**

- SHIRAIWA TAKAYUKI ET AL: "Data Assimilation in the Welding Process for Analysis of Weld Toe Geometry and Heat Source Model", vol. 60, no. 6, 15 June 2020 (2020-06-15), JP, pages 1301 - 1311, XP093223643, ISSN: 0915-1559, Retrieved from the Internet <URL:https://www.jstage.jst.go.jp/article/isijinternational/60/6/60_ISIJINT-2019-720/_article/-char/ja> [retrieved on 20241113], DOI: 10.2355/isijinternational.ISIJINT-2019-720
- ANONYMOUS: "Tree Parzen Estimator in Bayesian Optimization for Hyperparameter Tuning", 31 December 2020 (2020-12-31), XP093224129, Retrieved from the Internet <URL:https://albertuskelvin.github.io/posts/2020/12/tree-structured-parzen-estimator-bayesian-optimization/> [retrieved on 20241114]
- MIYOSHI TAKEMASA: "Advancing Data Assimilationas a Science Hub - Weather prediction and beyond", 11 July 2018 (2018-07-11), XP093223928, Retrieved from the Internet <URL:https://www.dataia.eu/sites/default/files/DATAIA_JST_International_Symposium/13_20180711miyoshi.pdf> [retrieved on 20241114]
- CHAPELIER M ET AL: "Free-Form Deformation Digital Image Correlation (FFD-DIC): A non-invasive spline regularization for arbitrary finite element measurements", COMPUTER METHODS IN APPLIED MECHANICS AND ENGINEERING, NORTH-HOLLAND, AMSTERDAM, NL, vol. 384, 22 June 2021 (2021-06-22), XP086703843, ISSN: 0045-7825, [retrieved on 20210622], DOI: 10.1016/J.CMA.2021.113992
- ISHII AKIMITSU ET AL: "Estimation of solid-state sintering and material parameters using phase-field modeling and ensemble four-dimensional variational method", vol. 29, no. 6, 27 July 2021 (2021-07-27), GB, pages 065012, XP093223919, ISSN: 0965-0393, Retrieved from the Internet <URL:https://iopscience.iop.org/article/10.1088/1361-651X/ac13cd/pdf> [retrieved on 20241114], DOI: 10.1088/1361-651X/ac13cd
- HAMDI HAMIDREZA ET AL: "Gaussian Processes for history-matching: application to an unconventional gas reservoir", COMPUTATIONAL GEOSCIENCES, BALTZER SIENCE PUBLISHERS , BUSSUM, NL, vol. 21, no. 2, 21 January 2017 (2017-01-21), pages 267 - 287, XP036198874, ISSN: 1420-0597, [retrieved on 20170121], DOI: 10.1007/S10596-016-9611-2
- MELINA A FREITAG: "Numerical linear algebra in data assimilation", GAMM-MITTEILUNGEN, WEINHEIM : WILEY-VCH, HOBOKEN, USA, vol. 43, no. 3, 10 September 2020 (2020-09-10), pages n/a, XP071819171, ISSN: 0936-7195, DOI: 10.1002/GAMM.202000014

**Description**

Technical Field

Technology disclosed herein relates to a data assimilation device, a data assimilation method, a data assimilation program, and a data assimilation system.

Background Art

Against a backdrop of digital transformation, Society 5.0, and the like, in order to improve the efficiency of industrial product development and design there is increasing need to improve prediction accuracy of numerical simulations for analysis/prediction based on complex physical phenomena. The prediction accuracy of numerical simulations are greatly influenced by how accurately physical property values used in numerical simulations and parameters contained in mathematic models can be identified from experimental data.

Hitherto many and various experiments have been performed, and physical property values and parameters have been identified so as to match the experimental results obtained therefrom. However greater demands for accuracy require more experimental data, with this leading to an increase in the number of times of experimentation.

In order to address this issue, data assimilation is known as a numerical computation technology to tie experimentation and numerical simulations together based on Bayesian statistics ("Introduction to Data Assimilation - Next Generation Simulation Technology" by Tomoyuki HIGUCHI, Genta UENO, Shinya NAKANO, Kazuyuki NAKAMURA, and Ryou YOSHIDA, published by Asakura Publishing Co., Ltd, 2011, and "Data Assimilation: Innovation in Merging Observations and Experimentation with Models", by Toshiyuki AWAJI, Masafumi KAMACHI, Motomi IKEDA, Yoichi ISHIKAWA published by Kyoto University Press, 2009). Physical property values and parameters can be efficiently deduced from experimental results by using data assimilation. Furthermore, various unmeasurable data can also be deduced from measurable experimental data, and states that are not able to be directly measured by experimentation can be deduced.

Data assimilation is already being utilized as numerical computation technology to improve forecasting accuracy, such as in weather forecasting and typhoon path prediction ("Challenges and Prospects of Ensemble Forecasting for Probabilistic Weather Forecasting", by Japan Meteorological Agency, Numerical Forecasting Department Report Volume 62, 2016, internet search <URL:https://www.jma.go.jp/jma/kishou/books/nwpreport/62/No62_all.pdf>), and against a backdrop of the boom in data science and machine learning of recent years, there is also activity in the application of data assimilation to fields of engineering assisted by advances in hardware such as GPUs and computational functionality.

SHIRAIWA TAKAYUKI ET AL: "Data Assimilation in the Welding Process for Analysis of Weld Toe Geometry and Heat Source Model", ISIJ INTERNATIONAL, vol. 60, no. 6 15 June 2020 (2020-06-15), pages 1301-1311, XP093223643, JP ISSN: 0915-1559, DOI: 10.2355/isijinternational.ISIJINT-2019-720 (Retrieved from the Internet: URL:https://www.jstage.jst.go.jp/article/isijinternational/60/6/60 ISIJINT-2019-720/_article/-char/ja) discloses two methods to obtain input parameters for welding simulations: a method of automatically identifying toe radius and reinforcement angle from height profile, and a method of estimating a heat source model in welding simulation. In the first method, the toe radius and reinforcement angle were extracted from the height profile by Akaike's information criterion. In the second method, the optimal combination of the heat input parameters was automatically searched by Bayesian optimization.

Anonymous: "Tree Parzen Estimator in Bayesian Optimization for Hyperparameter Tuning", 31 December 2020 (2020-12-31), XP093224129, (Retrieved from the Internet: URL:https://albertuskelvin.github.io/posts/2020/12/tree-structured- parzen-estimator-bayesian-optimization/) discloses that one of the techniques in hyperparameter tuning is called Bayesian Optimization. It selects the next hyperparameter to evaluate based on the previous trials.

HAMDI HAMIDREZA ET AL: "Gaussian Processes for history-matching: application to an unconventional gas reservoir", COMPUTATIONAL GEOSCIENCES, BALTZER SIENCE PUBLISHERS , BUSSUM, NL, vol. 21, no. 2, 21 January 2017 (2017-01-21), pages 267-287, XP036198874, ISSN: 1420-0597, DOI: 10.1007/S10596-016-9611-2 discloses the applicability of using a Gaussian Process modeling approach for reservoir history-matching problems, which is exemplified by numerical analysis of production data from a horizontal multi-stage fractured tight gas condensate well.

Further background art is disclosed by Miyoshi Takemasa: "Advancing Data Assimilationas a Science Hub - Weather prediction and beyond",
11 July 2018 (2018-07-11), XP093223928, (Retrieved from the Internet: URL:https://www. dataia. eu/sites/default/files/DATAIA_JST_International_Symposium/13_20180711miyoshi.pdf); CHAPELIER M ET AL: "Free-Form Deformation Digital Image Correlation (FFD-DIC): A non-invasive spline regularization for arbitrary finite element measurements", COMPUTER METHODS IN APPLIED MECHANICS AND ENGINEERING, NORTH-HOLLAND, AMSTERDAM, NL, vol. 384, 22 June 2021 (2021-06-22), XP086703843, ISSN: 0045-7825, DOI: 10.1016/J.CMA.2021.113992; and ISHII AKIMITSU ET AL: "Estimation of solid-state sintering and material parameters using phase-field modeling and ensemble

**EP 4 404 213 B1**



four-dimensional variational method", MODELLING AND SIMULATION IN MATERIALS SCIENCE AND ENGINEERING, vol. 29, no. 6 27 July 2021 (2021-07-27), page 065012, XP093223919, GB ISSN: 0965-0393, DOI: 10.1088/1361-651X/ac13cd (Retrieved from the Internet: URL:https://iopscience.iop.org/article/10.1088/1361-651X/ac13cd/ pdf).

SUMMARY OF INVENTION

Technical Problem

However, conventional computation algorithms for data assimilation have an issue in that not only is it often difficult to implement numerical simulations, but there is also a need for a large amount of computing.

In consideration of the above circumstances, an object of the technology disclosed herein is to provide a data assimilation device, method, and program that are able to perform data assimilation with an algorithm that suppresses computational cost and is easily implementable, and a data assimilation system of the same.

Solution to Problem

The invention is set out in the appended set of claims.

The technology disclosed herein exhibits the advantageous effects enabling data assimilation to be performed with an algorithm that suppresses computational cost and is also easily implementable.

BRIEF DESCRIPTION OF DRAWINGS

Fig. 1 is a schematic block diagram illustrating an example of a computer that functions as a data assimilation device of the present exemplary embodiment.

Fig. 2 is a block diagram illustrating a configuration of a data assimilation device of the present exemplary embodiment.

Fig. 3 is a flowchart illustrating a data assimilation processing routine in a data assimilation device of the present exemplary embodiment.

Fig. 4 is a diagram illustrating results of powder sinter simulation of Example 1.

Fig. 5 is a diagram illustrating estimation results of a sintered body inside using data assimilation processing of Example 1.

Fig. 6 is a diagram illustrating a computation process for minimizing an evaluation function compared to a conventional method.

Fig. 7 is a diagram illustrating an example of experimental data of Example 2.

Fig. 8 is a diagram illustrating an example of simulation results of Example 2.

Fig. 9 is a cross-section illustrating profiles and dimensions of a die and a blank employed in experimentation in Example 2.

Fig. 10 is a diagram illustrating in-situ observation results for a three-dimensional change in fine silver particles in Example 3.

Fig. 11 is a graph illustrating changes in value of an evaluation function of Example 3.

Fig. 12 is a diagram illustrating an example of estimation results obtained by sinter simulation in Example 3 for timewise changes in three-dimensional shapes of fine silver particles during sintering.

Fig. 13 is a schematic diagram of a process to compute a posteriori distribution from a priori distribution based on Bayes' theorem.

Fig. 14 is a block diagram illustrating a configuration of a data assimilation system in a modified example of the present exemplary embodiment.

DESCRIPTION OF EMBODIMENTS

Description follows regarding an example of an exemplary embodiment of technology disclosed herein, with reference to the drawings. Note that the same reference numerals will be appended in the drawings to the same or equivalent configuration elements and parts. Moreover, dimensions and proportions in the drawings are exaggerated for ease of explanation, and sometimes differ from actual proportions.

Outline of Present Exemplary Embodiment

First an outline of the present exemplary embodiment will be described.

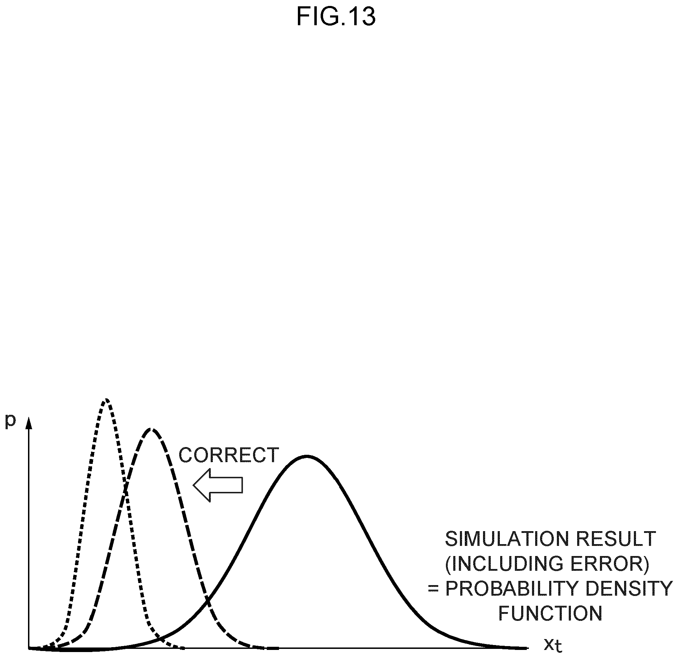

As illustrated in Fig. 13, data assimilation considers the fact that errors are always contained in experimental data yt and in numerical simulation results xt for time t, so these are expressed as probability density functions. Then based on Bayes' theorem, numerical simulation results are able to be corrected so as to approach experimental data as long as errors in the experimental data are determined to be smaller than errors in the numerical simulation results, as illustrated in the following equation.

$$p(\boldsymbol{x}_t \mid \boldsymbol{y}_{1t}) \propto p(\boldsymbol{y}_t \mid \boldsymbol{x}_t) p(\boldsymbol{x}_t \mid \boldsymbol{y}_{1t-1})$$

Wherein, for example, $y_{1:t}$ represents all experimental data from an initial state to time t.

Fig. 13 illustrates how a posteriori distribution $p(xt \mid y_{1:t})$ indicated by the dashed line is obtained from a likelihood $p(yt \mid xt)$ indicated by the dotted line and from a priori distribution $p(xt \mid y_{1:t-1})$ indicated by the solid line, and how numerical simulation results are corrected.

Mathematically speaking this indicates that the a priori distribution is corrected so as to approach the experimental data when errors represented by a variance-covariance matrix of a probability density function (likelihood) representing the experimental data are smaller than a probability density function (a priori distribution) representing the numerical simulation results, and the a posteriori distribution is obtained.

Conventional data assimilation algorithms for numerical computation using a computer can be broadly split into the following two types.

A first type is an algorithm employing ensemble approximation of a probability density function. The data assimilation algorithms in this classification use "ensemble approximation of probability density function" in which a probability density function is treated as an aggregation (histogram) of many numerical simulation results. Examples of typical algorithms thereof include an Ensemble Kalman Filter (EnKF), a Particle Filter (PF), and a Merging Particle Filter (MPF).

Another type is an algorithm based on a minimization computation of an evaluation function representing errors between actual measurement values and numerical simulation results. The data assimilation algorithms in this classification are called adjoint method or calculus of variations, and an evaluation function $J$ is defined to represent the errors between experimental data and numerical simulation results, and unknown parameters and an initial state are estimated by solving a minimization problem for J. These algorithms differ from algorithms using ensemble approximation of probability density functions described above, and do not need ensemble approximation of probability density functions. Examples of typical algorithms thereof include Three-Dimensional Variational methods and Four-Dimensional Variational methods (4DVar).

Explanation follows regarding issues arising with algorithms using ensemble approximation of probability density functions. In data assimilation based on such algorithms, there is a need to execute many numerical simulations due to using ensemble approximation of the probability density function. "Data assimilation for phase-field models based on the ensemble Kalman filter" by K. Sasaki, A. Yamanaka, H. Nagao, and S. Ito published in Computational Materials Science, 141 (2018), pp. 141-152 describes the need to execute at least several hundred numerical simulations in order to perform data assimilation with good estimation accuracy, with vast amounts of compute required.

Next, description follows regarding issues arising with algorithms based on minimization computation of an evaluation function. There is no need for ensemble approximation of probability density functions in such algorithms, and the amount of compute is smaller than for the above algorithms using ensemble approximation of probability density functions.

However, there is a need to compute a gradient of the evaluation function $J$ in order to solve the minimization problem of the evaluation function J, and there is a need to analytically derive an operator called an adjoint model during such computational processing. Derivation of an adjoint model in a numerical simulation handling a non-linear phenomenon is difficult due to needing a high level of mathematical knowledge, with this being a bottleneck from a practical perspective. Moreover, even supposing success in the derivation of an adjoint model and that the gradient of the evaluation function $J$ was able to be computed, solving a minimization problem is not then generally easy for the evaluation function J, which is often a multimodal function. Note that there is also an ensemble four-dimensional variational method (Ensemble 4DVar (En4DVar)) that merges an algorithm using ensemble approximation of probability density functions as described above with an algorithm based on minimization computation of an evaluation function. However since these are algorithms that use ensemble approximation of probability density functions, ultimately the issue of needing a vast amount of compute is not solved.

In the present exemplary embodiment a novel data assimilation algorithm is employed combined with Bayesian Optimization (BO) that is an optimization theory. The amount of compute can be greatly reduced in the present exemplary embodiment by applying Bayesian Optimization to minimization computation of the evaluation function J. Moreover, application of Bayesian Optimization is able to eliminate the need for computation of the gradient of the evaluation function J as needed in a conventional adjoint method, is simple to implement (create source code), and promotes the application of data assimilation to numerical simulation in various fields.

Configuration of Data Assimilation Device According to Present Exemplary Embodiment

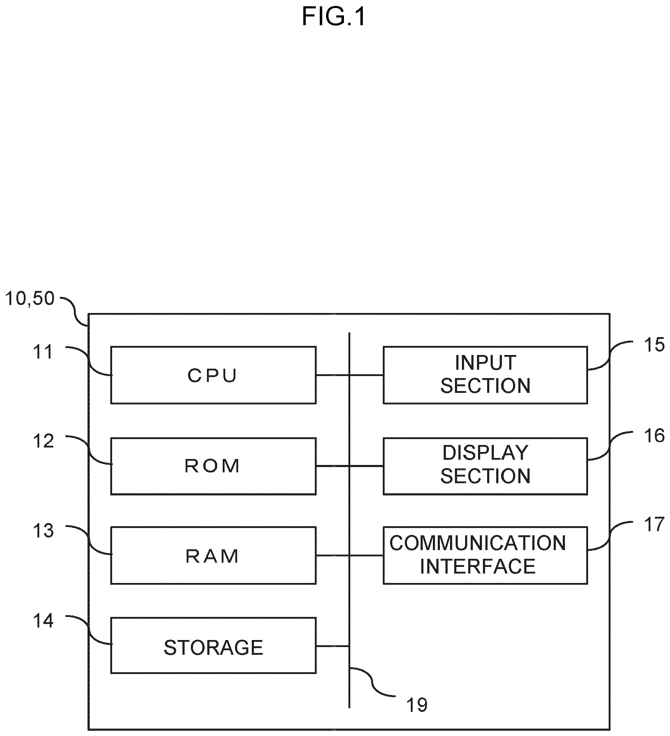

Fig. 1 is a block diagram illustrating a hardware configuration of a data assimilation device 10 of the present exemplary embodiment.

As illustrated in Fig. 1, the data assimilation device 10 includes a central processing unit (CPU) 11, read only memory (ROM) 12, random access memory (RAM) 13, storage 14, an input section 15, a display section 16, and a communication interface (I/F) 17. Each configuration is connected together through a bus 19 so as to be capable of communicating with each other.

The CPU 11 is a central processing unit that executes various programs and controls each section. Namely, the CPU 11 reads a program from the ROM 12 or storage 14, and executes the program using the RAM 13 as a workspace. The CPU 11 controls each of the above configuration and performs various computational processing according to the program stored on the ROM 12 or the ROM 12 or storage 14. In the present exemplary embodiment, a data assimilation program for executing data assimilation processing is stored on the ROM 12 or the storage 14. The data assimilation program may be a single program, or may be a program group configured from plural programs or modules.

The ROM 12 stores various programs and various data. The RAM 13 serves as workspace to temporarily store programs or data. The storage 14 is configured from a hard disk drive (HDD) or solid state drive (SSD), and is stored with various programs including an operating system, and with various data.

The input section 15 includes a pointing device such as a mouse, and a keyboard, and is employed to perform various inputs.

The input section 15 receives actual measurement values of a measured change in a specific environment of a data assimilation target.

The display section 16 is, for example, a liquid crystal display, and displays various information. The display section 16 may be a touch panel type and also function as the input section 15.

The communication interface 17 is an interface for communicating with other devices, and employs a standard such as, for example, Ethernet (registered trademark), FDDI, or Wi-Fi (registered trademark).

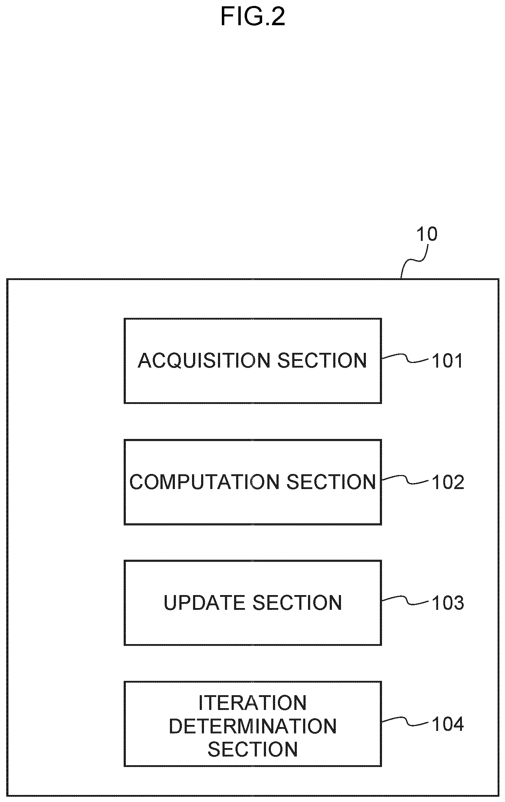

Next, description follows regarding a functional configuration of the data assimilation device 10 not in accordance with the invention. Fig. 2 is block diagram illustrating an example of a functional configuration of the data assimilation device 10.

The data assimilation device 10 is, from a functional perspective, configured including an acquisition section 101, a computation section 102, an update section 103, and an iteration determination section 104, as illustrated in Fig. 2.

The acquisition section 101 acquires the input actual measurement values of the measured change in the specific environment of the data assimilation target. For example, experimental data configured from the actual measurement values of the measured change under experimental conditions representing the specific environment of a data assimilation target are acquired.

The computation section 102 employs a preliminary initial state and preliminary values of unknown parameter(s) related to the data assimilation target to perform a numerical computation of a change to the specific environment of the data assimilation target. The computation section 102 also employs values of the initial state and the unknown parameters as updated by the update section 103 to perform the numerical computation again. For example, the computation section 102 feeds values of the initial state and unknown parameter, and data expressing a specific environment the same as the experimental conditions to simulation software (which may be an execution file of compiled source code) for performing a numerical computation of a change in the specific environment of the data assimilation target, performs a numerical computation of the change in data assimilation target, and finds predicted values corresponding to the experimental data.

The update section 103 computes a value of an evaluation function representing errors between the actual measurement values as acquired by the acquisition section 101, and the predicted values corresponding to the actual measurement values obtained from the results of the numerical computations by the computation section 102. The update section 103 finds plural combinations of the values of the initial state and the unknown parameters combined with values of the evaluation function. The update section 103 takes the plural combinations of the values of the initial state and unknown parameters combined with the evaluation function values to derive values of the initial state and unknown parameters that minimize the evaluation function value using Bayesian Optimization based on a Gaussian process regression, then updates the values of the initial state and unknown parameters with these derived values.

Specifically, the update section 103 takes the plural combinations of values of the initial state and the unknown parameters combined with the evaluation function value, and performs regression analysis using Gaussian process regression on a relationship between the values of the initial state and unknown parameters and the evaluation function values. The update section 103 finds mean and variance of the evaluation function values corresponding to freely selected values of the initial state and unknown parameters obtained by regression analysis, and finds a value of an acquisition function from the mean and variance of the evaluation function value. Then from the acquisition function value, the update section 103 update the values of the initial state and unknown parameters estimated to produce the minimum value of the evaluation function.

Explanation follows regarding a specific example of the evaluation function. Experimental data is acquired for a time series from the initial state (time t = 0) to a given time t = $t_{end}$ (as notation, the experimental data at given time t is expressed by vector yt). Suppose that prediction values at time t obtained by numerical computation are defined by vector xt. An evaluation function J representing errors between the experimental data and numerical simulation results is defined by the following equation based on a maximum likelihood estimation method or on Maximum Posterior Estimation (MAP).
Equation (1)

$$J = \frac{1}{2}\left(x_0 - x_0^b\right)^{\mathrm{T}} B^{-1}\left(x_0 - x_0^b\right) + \sum_{t=0}^{t_{end}} \frac{1}{2}\left(H_t\left(M\left(x_0\right)\right) - y_t\right)^{\mathrm{T}} R_t^{-1}\left(H_t\left(M\left(x_0\right)\right) - y_t\right)$$

$$(1)$$

In the above equation, $x_0$ is a vector configured from the unknown parameters and initial state configuring the input data to the numerical simulation. $x_0^b$ represents an initial estimated value of $x_0$ when the numerical simulation results reproduce the experimental data. B is called a background error covariance matrix, Rt is called an observation error covariance matrix, and they respectively represent the sizes of errors in $x_0^b$ and $y_t$. $M(x_0)$ represents a simulation model. Ht is an operator employed to extract a quantity comparable to experimental data yt from numerical simulation results (namely xt), and is called an observation operator. $x_0$ to minimize the evaluation function J of Equation (1) should be a vector configured from the optimum parameters and initial state that are to be found by data assimilation, and this is expressed by $x_0^a$.

Note that in conventional data assimilation algorithms of an adjoint method or calculus of variations, the gradient of Equation (1) is computed by the following equation so as to find $x_0^a$ to minimize Equation (1).
Equation (2)

$$\nabla J = B^{-1}\left(x_0 - x_0^b\right) + \sum_{t=0}^{t_{end}} \left(H_t M_{t-1} M_{t-2} \ldots M_0\right)^{\mathrm{T}} R_t^{-1}\left(H_t\left(M\left(x_0\right)\right) - y_t\right)$$

$$(2)$$

In the above, Ht and Mt are represented by the respective following equations.
Equation (3)

$$H_t = \frac{\partial H_t\left(x_t\right)}{\partial x_t}\ ,$$

$$(3)$$

Equation (4)

$$M_t = \frac{\partial M\left(x_t\right)}{\partial x_t}\ .$$

$$(4)$$

An issue that arises in implementation is that Equation (4) needs to be computed in order to compute Equation (2). Namely, because many simulation models are expressed by partial differential equations with a high degree of non-linearity, Mt is difficult to find analytically, with this being the reason why implementation of data assimilation is difficult. Moreover, even suppose that Equation (4) is obtained, there is still a high computation cost to computing Equation (2) and to computing so as to minimize evaluation function J of Equation (1).

However in the present exemplary embodiment there is no need to compute Equation (2), enabling easy implementation of data assimilation, and enabling a great reduction in computational cost.

The iteration determination section 104 determines whether or not a predetermined iteration end condition has been satisfied. The iteration determination section 104 causes the numerical computation by the computation section 102 and the updating by the update section 103 to be repeated until the iteration end condition has been satisfied. The optimum values of the initial state and unknown parameters finally obtained are acquired as the data identification result. The iteration end condition may be that the number of iterations has reached an upper limit, that the value of the evaluation function has converged, that an iteration end instruction has been input by a user looking at the data identification results, or the like.

Operation and Advantageous Effects of Data Assimilation Device According to Present Exemplary Embodiment

Next, description follows regarding operation and advantageous effects of the data assimilation device 10 according to the present exemplary embodiment.

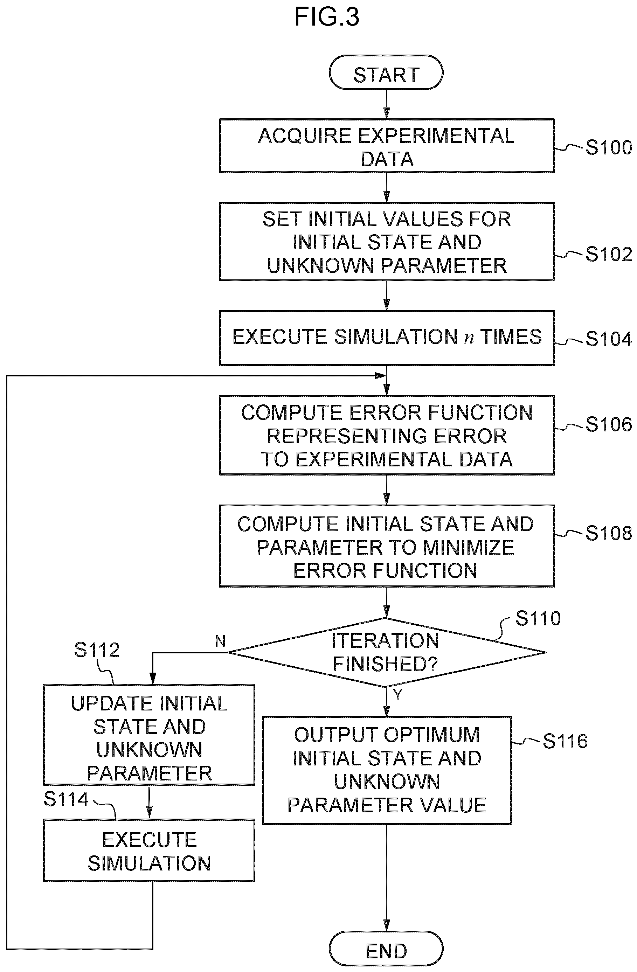

Fig. 3 is a flowchart illustrating a flow of data assimilation processing by the data assimilation device 10. The CPU 11 reads the data assimilation program from the ROM 12 or the ROM 12 or storage 14, and performs data assimilation processing by expanding and executing the data assimilation program in the program in the RAM 13. The data assimilation device 10 is input with experimental data configured from actual measurement values of a measured change to under experimental conditions representing the specific environment of the data assimilation target. Moreover, suppose that the initial state and the initial value of the unknown parameters to employ in the numerical computation, and ranges of values that may be taken by the unknown parameters, are defined.

First at step S100, the CPU 11 functions as the acquisition section 101 and acquires experimental data configured from the actual measurement values of measured change under experimental conditions expressing the specific environment of the data assimilation target.

Next at step S102, the CPU 11 functions as the computation section 102 and sets initial values for the initial state and unknown parameters. Specifically $x_0^b$ is set.

At step S104, the CPU 11 functions as the computation section 102 and provides values of the initial state and unknown parameters and data representing a specific environment the same as the experimental conditions to the simulation software (which may be an execution file of compiled source code) for performing numerical computation of change in a specific environment of the data assimilation target, performs numerical computation of change of the data assimilation target, and finds values corresponding to the experimental data. Specifically, a numerical simulation is performed employing $x_0(i)$ as the values of the unknown parameters and initial state. n individual values of the initial state and unknown parameters are prepared, and the numerical simulation is performed n times to find n individual values corresponding to the experimental data.

At step S106, the CPU 11 functions as the update section 103 and computes values of the evaluation function representing the error between the actual measurement values as acquired at step S100, and the values corresponding to the actual measurement values obtained from the results of the numerical computation at steps S104 or S114.

Specifically, the evaluation function $J$ is computed according to Equation (1). When doing so a priori information D (1:n) is created using Bayesian optimization computation. In order to do this, at step S102 n sets are prepared of values of the unknown parameters and initial state that fall within pre-set ranges, as $x_0(i)$ (wherein i = 1, 2, ..., n). Herein, n is a freely selected integer of one or more. Moreover, the evaluation function for the results of numerical simulation performed using $x_0(i)$ (wherein i = 1, 2, ..., n) is denoted by $J(x_0(i))$ (wherein i = 1, 2, ..., n).

In cases in which the numerical simulation has been executed n + 1 times at step S114, described later, the a priori information D (1:n+1) is created with a newly added combination of $x_0(n + 1)$ and $J(x_0(n + 1))$.

At step S108, the CPU 11 functions as the update section 103, using the a priori information D (1:m) (wherein m ≥ n), computes the values of the initial state and unknown parameters so as to minimize the value of the evaluation function $J$ using Bayesian optimization from the plural combinations of the values of the initial state and unknown parameters combined with the evaluation function $J$ values.

Specifically, not in accordance with the invention, according to an algorithm for Bayesian optimization, regression analysis using Gaussian process regression is performed on a relationship between the values of the initial state and unknown parameters and the evaluation function values from the plural combinations of the values of the initial state and unknown parameters combined with the values of the evaluation function. A mean and a variance are found of the evaluation function values corresponding to the freely selected values of the initial state and unknown parameters as obtained by the regression analysis, an acquisition function value $a(x_0)$ is found from the mean and variance of the evaluation function values, and then the acquisition function $a(x_0)$ is computed to minimize the evaluation function $J$ of Equation (1). There is no limitation to the type of acquisition function employed here and, for example, an Expected Improvement (EI) function may be employed therefor. $x_0$ that maximizes this acquisition function is denoted by $x_0(n + 1)$.

At step S110 the CPU 11 functions as the iteration determination section 104 and determines whether or not the predetermined iteration end condition has been satisfied. Processing proceeds to step S112 when the iteration end condition has not been satisfied. However, processing proceeds to step S116 when the iteration end condition has been satisfied.

At step S112, the CPU 11 functions as the update section 103 and changes the values of the initial state and unknown parameters as provided to the simulation software (which may be an execution file of compiled source code) to the values of the initial state and unknown parameters as computed at step S108.

At step S114, the CPU 11 functions as the computation section 102, provides the values of the initial state and unknown parameters as changed at step S112 and the data representing a specific environment the same as the experimental conditions to the simulation software (which may be an execution file of compiled source code), performs a numerical computation of the change of the data assimilation target, and finds the values corresponding to the experimental data. Processing then returns to step S106.

At step S116, the CPU 11 displays the optimal values of the initial state and unknown parameters to minimize the evaluation function as an identification result on the display section 16, saves the optimal values in the ROM 12 or the storage 14, and ends the data assimilation processing.

Example 1

Next description follows regarding an example in which the data assimilation program of the present exemplary embodiment is applied to a powder sinter process.

Sintering is one type of material manufacturing technology in which a powder is heated to produce a precise solid, and is technology at the foundation of the powder metallurgy and ceramic industries. In particularly, sintering is a technology recently viewed as being important from the perspective of research and development of 3D printers using laser sintering technology. This means that active research is being performed into numerical simulations of sintering for predicting crystal changes and the like within a solid produced by sintering, with the objective of controlling various properties of materials manufactured by sintering (hereafter abbreviated to sinter simulation). However, there is a need to collect a large volume of experimental data in order to correctly identify physical property values for use in sinter simulations, and parameters contained in a mathematical model for sinter simulation computation, experimentally.

The present Example 1 applies the above exemplary embodiment to sinter simulation using a phase-field model, and demonstrates that it is possible to estimate crystal changes during sintering and physical property values/parameter by numerical experimentation.

The numerical experimentation referred to here is not performing data assimilation (state estimation and parameter estimation) using actual experimental data, and is rather a method to perform validation of a data assimilation algorithm by performing data assimilation by setting preliminary true values for parameters etc. subject to estimation, and taking the simulation results obtained using such true values as pseudo experimental data. This is called twin experiments in the field of data assimilation.

The material that is the subject of the present Example 1 is silver particles (powder). Moreover, a comparison of the amount of compute of the above exemplary embodiment against that of the conventional data assimilation algorithm En4Dvar indicates that the amount of compute can be reduced to 1/2 or less.

Table 1 illustrates physical property values/parameters (true values in numerical experimentation) employed in the sinter simulation performed to obtain the pseudo experimental data.

Table 1

|  | Value |
|---|---|
| Diffusion coefficient $D_{surf}$ of silver atoms at silver particle surface | $1.47 \times 10^{-12}$ m$^2$/s |
| Diffusion coefficient $D_{gb}$ of silver atoms at grain boundaries | $1.28 \times 10^{-10}$ m$^2$/s |
| Parameter related to agglomeration speed of silver particles, $m_{tr}$ | $1.00 \times 10^{-10}$ m$^5$/(J·s) |
| Parameter related to migration speed at grain boundaries, $M_\eta$ | $2.00 \times 10^{-7}$ m$^5$/(J·s) |

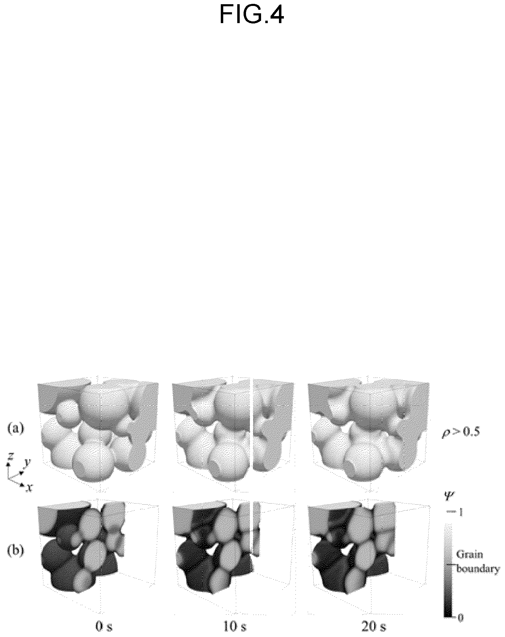

Moreover, Fig. 4 illustrates results of a sinter simulation executed using the physical property values/parameters indicated in Table 1.

Fig. 4(a) illustrates a surface profile change of a sintered body, and illustrates fusion (agglomeration) of fine silver particles due to sintering. Fig. 4(b) illustrates an z-axis centered cross-section of a sintered body, and shows which crystals and which grain boundaries are present at which position. A numerical experimentation only employs the results illustrated in Fig. 4(a) as pseudo observation data.

Recently the possibility has arisen to use an electron microscope for in-situ observation of a sinter process, and so the surface profile change of the sintered body illustrated in Fig. 4(a) has been taken as pseudo observation data (assumed to be experimental data acquirable by actual experimentation). However, the data of Fig. 4(b) assumes that an unknown state that would be difficult to directly measure in experimentation is the subject of estimation for the numerical experimentation. Namely, in the present numerical experimentation, a reasonableness validation of present exemplary embodiment is performed as long as the physical property values and parameter values illustrated in Table 1 and the state changes illustrated in Fig. 4(b) can be estimated merely from the information of the surface profile change of the sintered body.

Table 2 illustrates initial estimated values of the physical property values and parameters in the numerical experimentation. Namely, the initial values of the physical property values and parameters are estimated by the present exemplary embodiment or by En4Dvar.

Table 2

| $D_{surf}$ [m²/s] | $D_{gb}$ [m²/s] | $m_{tr}$ [m⁵/(J·s)] | $M_\eta$ [m³/(J·s)] |
|---|---|---|---|
| $0.70 \times 10^{-12}$ | $0.60 \times 10^{-10}$ | $0.50 \times 10^{-10}$ | $1.00 \times 10^{-7}$ |

As illustrated in Fig. 2, the initial values are set to 1/2 the true values illustrated in Table 1. As illustrated in Table 3, the physical property values and parameters can be estimated with good accuracy using the above exemplary embodiment.

Table 3

| | $D_{surf}$ ($\times 10^{-12}$) [m²/s] | $D_{gb}$ ($\times 10^{-10}$) [m²/s] | $m_{tr}$ [m⁵/(J·s)] | $M_\eta$($\times 10^{-7}$) [m³/(J·s)] |
|---|---|---|---|---|
| True value | 1.47 | 1.28 | 1.00 | 2.00 |
| Estimation result (n = 20) | $1.51 \pm 0.67$ | $1.37 \pm 0.11$ | $1.06 \pm 0.08$ | $1.94 \pm 0.44$ |

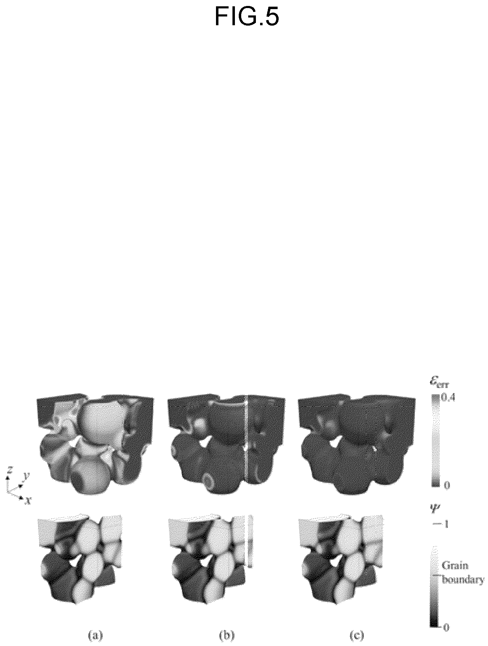

Fig. 5 illustrates estimation results of a sintered body using the above exemplary embodiment. There is hardly any error compared to Fig. 4, and the sintered body inside can also be estimated with good accuracy.

The upper row in Fig. 5 shows errors between the pseudo experimental data illustrated in Fig. 4(a) and the estimation results of the above exemplary embodiment, with the error being reduced from Fig. 5(a) to Fig. 5(c) by minimization of the evaluation function, and improvement in the state estimation accuracy is apparent. The lower row illustrates estimation results for a sintered body inside, and there is hardly any error compared to Fig. 4(b), enabling the sintered body inside to be estimated with good accuracy.

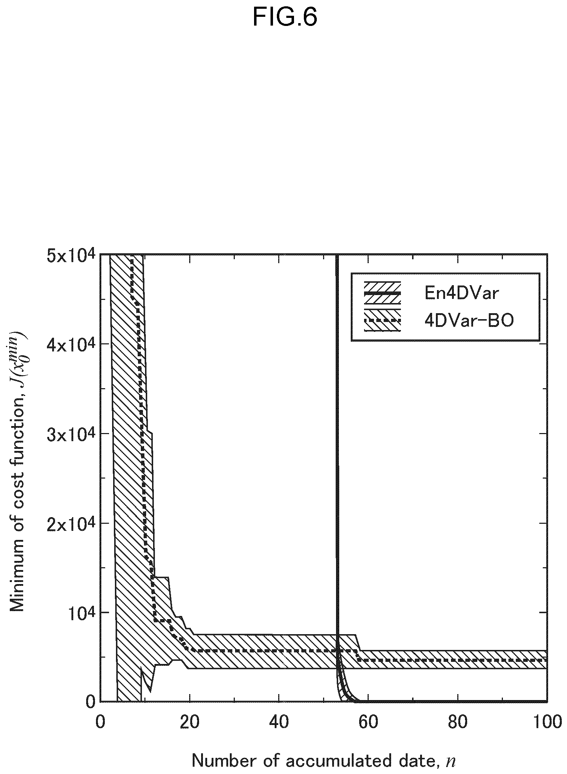

Fig. 6 illustrates a minimization computation processes for evaluation functions computed by the above exemplary embodiment and by En4Dvar. The horizontal axis indicates the number of times sinter simulation was executed to minimize the evaluation function. In En4Dvar, the ensemble number was 50 to guarantee data assimilation accuracy. Namely, in En4Dvar there is a need to execute sinter simulation 50 times prior to performing minimization computation of the evaluation function. The evaluation function accordingly reduces from after n = 50.

In contrast thereto, in the above exemplary embodiment there is no need to perform plural sinter simulations in advance, enabling the state estimation and physical property values/parameter estimation to be performed with not more than 1/2 the amount of compute (number of times of sinter simulation) compared to in En4Dvar.

Example 2

Next, description follows regarding an example in which the data assimilation processing of the above exemplary embodiment is applied to press forming processing simulation for a metal sheet material.

Press forming processing for metal sheet materials is an important industrial process in the manufacturing industry, a typical example thereof being the automotive industry. A numerical simulation of press forming processing (hereafter abbreviated to forming simulation) is performed using a finite element method with the aim of improving yield during metal sheet material press forming processing and improving development efficiency, and there is demand for improved prediction accuracy thereof. In order to improve prediction accuracy of forming simulation, there is a demand for technology capable of reverse identification of parameters of a material model for use in forming simulation (a mathematical model describing deformation behavior of a material) from experimental data.

The above exemplary embodiment is used to import each type of experimental data obtained by press forming processing tests (for example, load and pressure imparted to a die during press processing, changes in thickness of a metal sheet material as measured by sensors incorporated inside a die) into a forming simulation, and enables physical property values of a metal sheet material and parameters of a material model to be identified with high accuracy while correcting forming simulation results. Note that conventionally an experiment (multi-axis stress test) is performed to impart various deformations to a material, and there is a need to execute plural experiments in order to identify the physical property values of a material and the parameters of a material model so as to align with the experimental results. For example, consider use of a dual axis stretch test in cases in which a metal sheet material is the subject, in such cases there is normally a need to perform a multi-axis stress test 18 times (9 conditions of changed stress state $\times$ two times to ensure reliability). However, in cases in which the data assimilation processing of the above exemplary embodiment is employed, the data assimilation is possible with a small amount of compute, and the number of times of experimentation can be reduced to once.

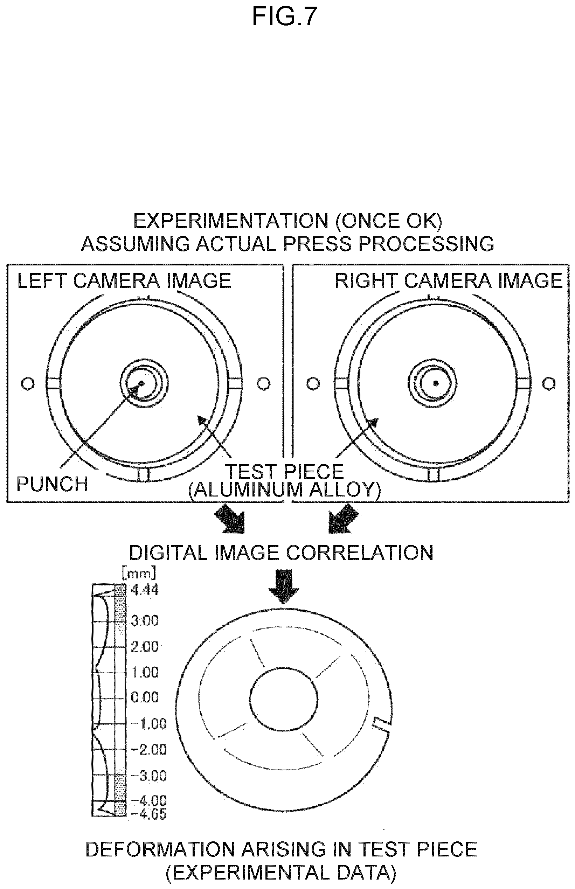

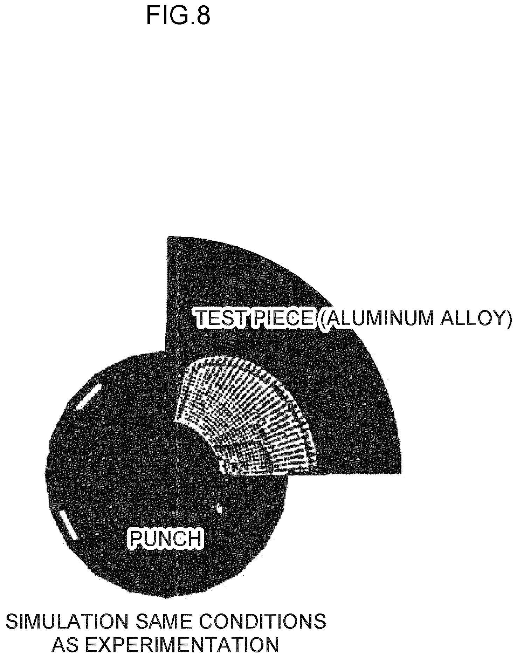

As illustrated in Fig. 7, deformation of the metal sheet material during press forming processing is imaged continuously using a digital camera, and a distribution of displacement distribution/strain of the material surface that was computed by processing the captured images using digital image correlation is imported into a forming simulation by data assimilation. Then numerical experimentation is performed to validate that the physical property values of the metal sheet material and the parameters of the material model are able to be identified with high accuracy while correcting the forming simulation results illustrated in Fig. 8.

The numerical experimentation was performed by executing the following procedure A to procedure D to validate the data assimilation processing of the above exemplary embodiment.

Procedure A

The data assimilation processing method of the present exemplary embodiment was employed to define true values of parameters of the material model that is to be subjected to reverse identification, and a forming simulation performed using these parameter values. In this Example 2 a material model called Yld2000-2d (see Reference Document 1) widely used to analyze deformation behavior of an aluminum alloy plate was employed, and the true values of the parameters thereof were assumed to be the values illustrated in Table 4. Moreover, as an example of the forming simulation, a numerical simulation of hole widening processing (processing to open a circular hole in thin sheet test pieces and to press out the circular hole using a circular cylinder shaped punch) was performed.

Reference Document 1: Plane stress yield function for aluminum alloy sheets - part 1: theory by F. Barlat, J. C. Brem, J. W. Yoon, K. Chung, R. E. Dick, D. J. Lege, F. Pourboghrat, S. H. Choi and E. Chu, published in International Journal of Plasticity, Vol. 19 (2003), No. 9, pp. 1297-1319.

Table 4

| $\alpha_1$ | $\alpha_2$ | $\alpha_3$ | $\alpha_4$ | $\alpha_5$ | $\alpha_6$ | $\alpha_7$ | $\alpha_8$ | $M$ |
|---|---|---|---|---|---|---|---|---|
| 0.966 | 1 | 0.892 | 1.01 | 0.994 | 0.916 | 0.984 | 1.157 | 8.86 |

Procedure B

Time series changes in the displacement and strain of the test piece surface obtained as the results of the hole widening processing simulation performed in procedure A are saved as pseudo experimental data. Note that in cases in which the data assimilation processing of the above exemplary embodiment is applied to actual press processing experimentation, experimental data are employed of time series changes in the displacement and strain of the test piece surface measured using digital image correlation.

Procedure C

The true values of the parameters defined in Procedure A are assumed to be unknown, and initial estimated value of the parameters for reverse identification using the data assimilation processing method of the above exemplary embodiment are set as the values illustrated in Table 5.

Procedure D

The pseudo experimental data saved at Procedure B using the data assimilation processing method of above exemplary embodiment are imported while performing a hole widening processing simulation employing parameters with the values illustrated in Table 5, namely the estimated values of the parameters are corrected in the process of performing correction of the hole widening processing simulation results based on the pseudo experimental data, and then finally identification of the parameters is performed.

Table 5

| $\alpha_1$ | $\alpha_2$ | $\alpha_3$ | $\alpha_4$ | $\alpha_5$ | $\alpha_6$ | $\alpha_7$ | $\alpha_8$ | $M$ |
|---|---|---|---|---|---|---|---|---|
| 1.0 | 1.0 | 1.0 | 1.0 | 1.0 | 1.0 | 1.0 | 1.0 | 8.0 |

The parameter values finally identified are illustrated in Table 6.

Table 6

| $\alpha_1$ | $\alpha_2$ | $\alpha_3$ | $\alpha_4$ | $\alpha_5$ | $\alpha_6$ | $\alpha_7$ | $\alpha_8$ | $M$ |
|---|---|---|---|---|---|---|---|---|
| 0.979 | 0.915 | 0.898 | 1.037 | 0.989 | 0.885 | 0.994 | 1.170 | 8.813 |

Although there are errors present, when compared to the parameter values (true values) of Table 4, there is good accuracy for parameter values identified with only one set of experimental data. Note that although in the present Example 2 only the parameters of the material model have been the subject of estimation, a state of the sheet material that is not able to be measured directly due to being inside the die may be estimated, such as a friction coefficient between die and sheet material, a temperature of the sheet material inside the die, or the like.

Moreover, experimentation conditions of the present Example 2 are as set out below.

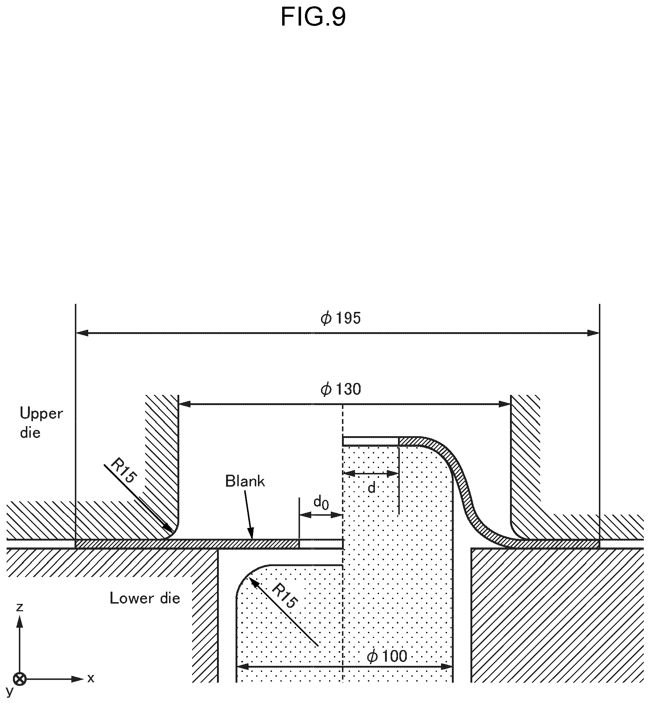

First a circular shape is cut out such that the metal sheet material has a diameter of 195 mm, and a hole is opened in the center with a circular shape having a diameter of 30 mm (see Fig. 9). This is hereafter called a blank. Fig. 9 is a cross-section representing the profile and dimensions of the die and the blank employed in the experiment.

Next, a random pattern is coated onto the blank by spraying.

A Teflon (registered trademark) sheet coated in Vaseline (lubricant) is then sandwiched between the blank and a punch die.

The blank is set in the die sandwiched between an upper die and a lower die.

The punch die is then raised in a z direction. The load on the punch die while this occurs is measured using a load cell. Moreover, successive images of the blank surface are imaged using two digital cameras.

Next, the punch die is stopped when the punch die has reached a specific z coordinate. The imaging with the digital cameras is also stopped.

The punch die is lowered, the dies are removed sequentially, and the test is ended.

The images captured by the digital cameras are processed using digital image correlation, and the deformation (displacement and strain) arising in the blank is computed by computer. The computed results are experimental data of data assimilation processing of the above exemplary embodiment.

Example 3

Next description follows regarding an example in which the data assimilation processing of the above exemplary embodiment is applied to a powder sinter process, and use of actual experimental data is demonstrated.

An objective of the present Example 3 is to estimate physical property values/parameters employed in sinter simulation (the four values indicated in Table 1 above and a rigidity constant k) by using a scanning transmission electron microscope (STEM) to make in-situ observations during a fine silver particle sinter process, with experimental data of three-dimensional shape changes of fine silver particles obtained thereby serving as data assimilation observation data.

The experimentation to validate the data assimilation processing of the above exemplary embodiment was performed by the following Procedure 1 to Procedure 3.

Procedure 1

An electron microscope was employed to make in-situ observations during a fine silver particle sinter process.

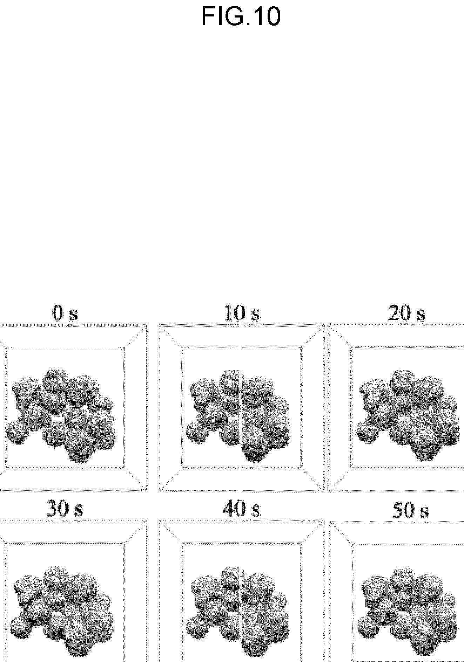

An in-situ heating stage is inserted inside a chamber of a scanning transmission electron microscope (STEM), and fine silver particles are placed on this stage. The in-situ heating stage is raised in temperature to 350°C only when sintering is being promoted. Moreover, when measuring the three-dimensional shape of the fine silver particles using a tomographic method, the in-situ heating stage is tilted after lowering the temperature to 200°C, a temperature at which sintering does not progress. In the present Example 3 the sintering was progressed for intervals of 5 seconds at a temperature of 350°C, and the three-dimensional shape of the fine silver particles was measured each time. Fig. 10 illustrates results of the three-dimensional shape of the fine silver particles as recreated from the experimental data acquired by the in-situ observations.

Procedure 2

Physical property values and parameters are estimated using the data assimilation method of the present invention.

Timewise changes in the three-dimensional shape of the fine silver particles during sintering obtained by Procedure 1 serve as observation data, and the physical property values/parameters (the four values indicated in Table 1 above and a rigidity constant k) employed in sinter simulation were estimated. The data assimilation method employed here is a method using Bayesian optimization based on a Tree-structured Parzan Estimator (TPE).

Search ranges, initial estimation values, and standard deviations of the initial estimation values for the physical property values/parameters subject of estimation are illustrated in Table 7.

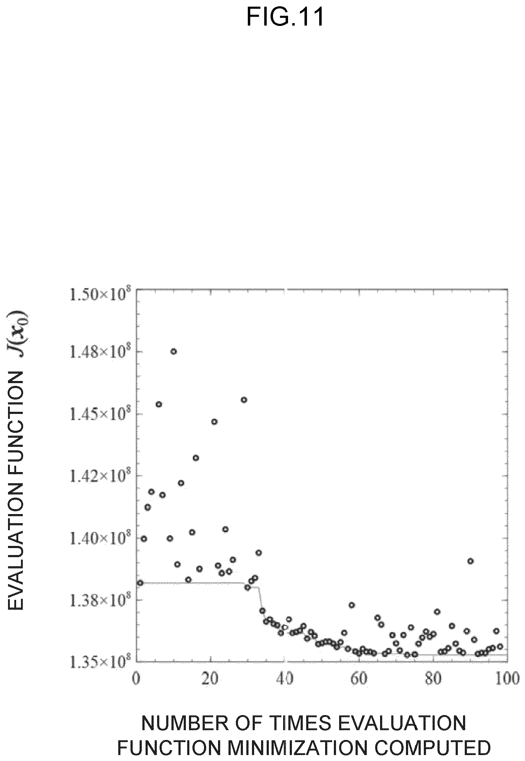

Changes in the evaluation function $J(x_0)$ when estimating the physical property values/parameters with the data assimilation method using Bayesian optimization based on TPE are illustrated in Fig. 11. The minimum value of the evaluation function is obtained at the point in time of the 73th repetition of the evaluation function minimization computation. The values of the physical property values/parameters obtained thereat are the optimum estimated values, and these are illustrated in Table 8.

Table 7

| Type | Search Range | Initial Estimation Value | Standard Deviation of Initial Estimation Value |
|---|---|---|---|
| Diffusion coefficient of silver atoms at silver particle surface $D_{surf}$ [m²/s] | $0 \leq D_{surf} \leq 2 \times 10^{-16}$ | $1.0 \times 10^{-16}$ | $5.0 \times 10^{-17}$ |
| Diffusion coefficient of silver atoms at grain boundaries $D_{gb}$ [m²/s] | $0 \leq D_{gb} \leq 2 \times 10^{-17}$ | $1.0 \times 10^{-17}$ | $1.0 \times 10^{-18}$ |
| Parameter related to agglomeration speed of silver particles $m_{tr}$ [m⁵/(J·s)] | $0 \leq m_{tr} \leq 10^{-20}$ | $1.0 \times 10^{-21}$ | $1.0 \times 10^{-22}$ |
| Parameter related to migration speed at grain boundaries $M_\eta$ [m³/(J·s)] | $0 \leq M_\eta \leq 10^{-9}$ | $5.0 \times 10^{-10}$ | $1.0 \times 10^{-10}$ |
| Rigidity Constant k [N/m²] | $10^6 \leq k \leq 10^8$ | $1.0 \times 10^7$ | $1.0 \times 10^{6.2}$ |
|  |  |  |  |

Table 8

| Type | Optimum Estimated Value |
|---|---|
| Diffusion coefficient of silver atoms at silver particle surface $D_{surf}$ [m²/s] | $0.988 \times 10^{-16}$ |
| Diffusion coefficient of silver atoms at grain boundaries $D_{gb}$ [m²/s] | $1.090 \times 10^{-17}$ |
| Parameter related to agglomeration speed of silver particles $m_{tr}$ [m⁵/(J·s)] | $0.948 \times 10^{-20}$ |
| Parameter related to migration speed at grain boundaries $M_\eta$ [m³/(J·s)] | $0.654 \times 10^{-9}$ |
| Rigidity Constant $k$ [N/m²] | $1.219 \times 10^6$ |

Procedure 3

A sintered body shape is estimated by sinter simulation using estimated physical property values/parameters.

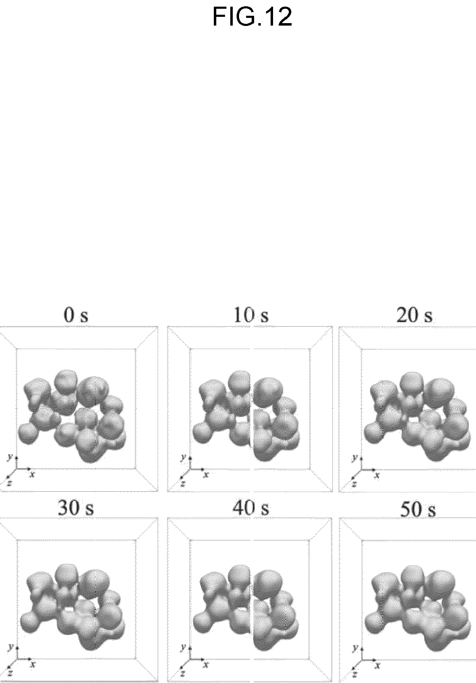

The optimum estimated values of the physical property values/parameters illustrated in Table 8 are employed, and the estimation results of timewise changes to the three-dimensional shape of fine silver particles during sintering obtained by performing a sinter simulation are illustrated in Fig. 12. It is apparent from a comparison with the in-situ observation results illustrated in Fig. 10 that three-dimensional shape changes of fine silver particles can be estimated with good accuracy.

As described above, the data assimilation device of the present exemplary embodiment employs a preliminary initial state and preliminary values of unknown parameters related to a data assimilation target, and repeats numerical computation of change in a specific environment of the data assimilation target and repeats updating of values of the initial state and unknown parameters so as to minimize a value of an evaluation function using Bayesian optimization. The values of the initial state and unknown parameters related to the data assimilation target are estimated thereby. This thereby enables computation cost to be suppressed, and enables data assimilation to be performed with an easily implementable algorithm.

Moreover, conventional data assimilation algorithms need a vast amount of compute, or are difficult to implement due to needing a high level of mathematical knowledge, and so it cannot be said that they are becoming widely employed in society, including industrial fields. In contrast thereto, the present exemplary embodiment overcomes the above issues, and the data assimilation algorithm of the present exemplary embodiment can be implemented as long as there is numerical simulation source code or simulation software. This means that numerical simulation that utilizes experimental data (data driven simulation) will spread to numerical simulations in various fields.

Moreover, an example of a conventionally employed method of Bayesian optimization is a minimum value search for a function not able to be formulated mathematically (a black box function). Moreover, in 4DVar a minimization computation is performed on an evaluation function Jhaving a clear mathematical formulation. Evaluation function $J$ minimization computation can be computed using conventional technology (steepest gradient descent method, Broyden-Fletcher-Goldfarb-Shanno (BFGS) method, or the like), however the gradient of the evaluation function J needs to be computed. The more complicated (higher the degree of non-linearity) of the phenomenon being handled by numerical simulation, namely computation of the gradient of the evaluation function J becomes more difficult the closer a real application is envisaged. Thus say that the evaluation function $J$ is actually a function not able to be formulated mathematically (a black box function), then application of Bayesian optimization is effective from an engineering perspective. Thus Bayesian optimization is applied, and minimization computation of the evaluation function $J$ is implemented without needing to compute the gradient of the evaluation function J. The amount of compute can also be reduced and implementation is also simple due to not needing to compute the gradient of the evaluation function J. The present exemplary embodiment focusses on overcoming a weakness with conventional adjoint methods (or calculus of variations), which do not use Bayesian optimization despite such advantages, and uses Bayesian optimization in data assimilation. The computation cost is suppressed thereby, and data assimilation can be performed with an algorithm that is easily implementable.

Moreover, the data assimilation device of the present exemplary embodiment not in accordance with the invention performs regression analysis using a Gaussian process regression on a relationship of the values of the initial state and unknown parameters to the values of the evaluation function. The data assimilation device finds the mean and variance of predicted values of the evaluation function corresponding to freely selected initial states and unknown parameter values obtained by regression analysis, and finds a value of an acquisition function from the mean and the variance of the predicted values of the evaluation function. From the value of the acquisition function, the data assimilation device finds the initial state and unknown parameter values estimated to produce the minimum value of the evaluation function. These procedures are repeated. This thereby enables the value of the evaluation function to be minimized without computing the gradient of the evaluation function.

Modified Examples

Note that the present invention is not limited by the exemplary embodiments, and various modifications and applications are possible within a range not departing from the scope of the claims.

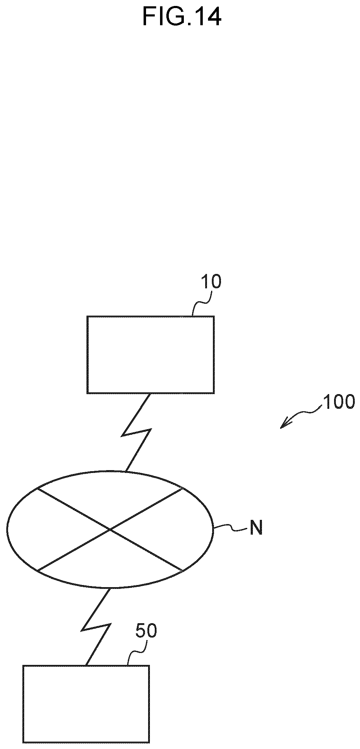

For example, the data assimilation device may be implemented by a single or plural servers, such that a user employs an information processing terminal connected over a network thereto to input actual measurement values of measured change in a specific environment of a data assimilation target and a preliminary initial state and preliminary values of unknown parameters related to the data assimilation target. In such cases, as illustrated in Fig. 14, a data assimilation system 100 is configured including the data assimilation device 10 that is a server, and an information processing terminal 50, with the data assimilation device 10 and the information processing terminal 50 connected together over a network N such as the internet. The information processing terminal 50 may, as illustrated in Fig. 1 be configured including a CPU 11, ROM 12, RAM 13, storage 14, an input section 15, a display section 16, and a communication interface 17, similarly to the data assimilation device 10. The input section 15 of the information processing terminal 50 receives the actual measurement values of the measured change in the specific environment of the data assimilation target, and the preliminary initial state and preliminary values of the unknown parameters related to the data assimilation target, that have been input by the user. The information processing terminal 50 transmits the actual measurement values of the measured change in the specific environment of the data assimilation target and the preliminary initial state and preliminary values of the unknown parameters related to the data assimilation target to the data assimilation device 10. An acquisition section 101 of the data assimilation device 10 acquires the received actual measurement values of the measured change in the specific environment of the data assimilation target and the preliminary initial state and preliminary values of the unknown parameters related to the data assimilation target. The data assimilation device 10 transmits an estimation result to the information processing terminal 50. The display section 16 of the information processing terminal 50 presents the user with the estimated initial state and values of the unknown parameters.

Moreover, although an example has been described in the above exemplary embodiment for a case in which the data assimilation target is a substance or material, and the unknown parameters are physical property values of the substance or material, there is no limitation thereto. The present invention is an invention related to data assimilation, this being a numerical computation technology for linking experimentation with numerical simulations, and so is utilizable in a wide range of fields in which numerical simulation is employed.

For example, the data assimilation target may be heat or a fluid, with parameters related to the heat or fluid employed in a simulation related to the heat or fluid serving as the unknown parameters.

Moreover, the data assimilation target may be electromagnetic waves, with parameters related to the electromagnetic waves employed in a simulation related to the electromagnetic waves serving as the unknown parameters.

Moreover, the data assimilation target may be weather, with time series data for temperature and pressure measured by a weather satellite or the like serving as the actual measurement values, such that parameters and the like of a weather simulation model employed in weather simulation are estimated.

Moreover, the data assimilation target may be a contagion phenomenon of a contagious disease, with daily count data for contracted patients serving as actual measurement values, so as to estimate contagion rate parameters and the like that are needed for simulation and are employed in a contracted patient number fluctuation simulation.

Moreover, the data assimilation target may be stock prices, daily stock price data may serve as the actual measurement values, with a stock price change simulation related to financial engineering employed so as to estimate parameters employed in the stock price change simulation. For example, the daily changes in stock prices can be predicted by a numerical simulation using a Black-Scholes model or the like.

Although an example has been described in the above exemplary embodiment of a cases not in accordance with the invention in which Bayesian optimization based on Gaussian process regression is employed as a specific method of Bayesian optimization, there is no limitation thereto. For example, Bayesian optimization based on a Tree-structured Parzan Estimator (TPE) may be employed. In such cases using a TPE, the data assimilation can also be performed without computing the gradient of the evaluation function.

Specifically, according to the invention the update section 103 computes values of an evaluation function representing errors between the actual measurement values acquired by the acquisition section 101, and values corresponding to the actual measurement values obtained from the results of numerical computation by the computation section 102. The update section 103 sorts plural combinations of the initial state and values of unknown parameters combined with values of the evaluation function into a higher rank group and a lower rank group configured from combinations of the initial state and values of the unknown parameters combined with the values of the evaluation function. The update section 103 estimates a probability density function for the higher rank group and a probability density function for the lower rank group, and finds a value of an acquisition function from the ratio of the probability density function for the higher rank group and the probability density function for the lower rank group. The data assimilation device updates the initial state and values of the unknown parameters estimated to produce a minimum value of the evaluation function from the value of the acquisition function.

More specifically, in Bayesian optimization based on TPE the evaluation function is computed similarly to in Bayesian optimization based on Gaussian process regression. Then after this the data obtained so far (combinations of the initial state and parameters as input and the evaluation function as output) is sorted into two groups, a higher rank group and a lower rank group, based on a threshold set for the magnitude of the evaluation function. A kernel density estimation is performed respectively for the data of each group of the higher rank group and the lower rank group, and two probability density functions are computed. Then a magnitude relationship of the acquisition function is computed from the ratio of the two probability density functions. Operations from then onward are similar to those of Bayesian optimization based on Gaussian process regression, the initial state and parameters are updated with reference to the maximum value of the acquisition function, and updating is repeated to find the optimum estimated values by minimizing the evaluation function.

Moreover, the various processing executed in each of the exemplary embodiments by the CPU reading software (programs) may be executed by various processors other than a CPU. Examples of such processors include programmable logic devices (PLD) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). Moreover, the data assimilation processing may be executed by any one of these various types of processors, or may be executed by a combination of two or more of the same type or different types of processors (such as plural FPGAs, or a combination of a CPU and an FPGA). The hardware structure of these various types of processors is more specifically an electric circuit combining circuit elements such as semiconductor elements.

Although the above exemplary embodiments have been described for embodiments in which the data assimilation program is pre-stored (installed) on the storage 14, there is no limitation thereto. The program may be provided in a format stored on a non-transitory storage medium such as a compact disk read only memory (CD-ROM), digital versatile disk read only memory (DVD-ROM), universal serial bus (USB) memory, or the like. Moreover, the program according may be provided in a format downloadable from an external device over a network.

**Claims**

1. A data assimilation device comprising:

an acquisition section that acquires an actual measurement value of a measured change in a specific environment of a data assimilation target;
a computation section that uses a preliminary initial state and a preliminary value of an unknown parameter that are related to the data assimilation target to perform a numerical computation of a change in the specific environment of the data assimilation target; and
an update section that computes a value of an evaluation function representing errors between the actual measurement value and a value obtained from a result of the numerical computation and corresponding to the actual measurement value, that finds an acquisition function from a plurality of combinations of values of the initial state and the unknown parameter combined with the evaluation function value, and that updates values of the initial state and the unknown parameter so as to minimize a value of the evaluation function based on a value of the acquisition function, wherein, in the data assimilation device:
the computation section uses values of the initial state and the unknown parameter as updated by the update section to perform the numerical computation again, and

values of the initial state and the unknown parameter related to the data assimilation target are estimated by repeating the numerical computation by the computation section and the updating by the update section, wherein:

the data assimilation target is a substance or a material; and
the unknown parameter is a physical property value of the substance or the material,
wherein
the update section computes a value of the evaluation function representing errors between the actual measurement value and a value obtained from a result of the numerical computation and corresponding to the actual measurement value, sorts a plurality of combinations of values of the initial state and the unknown parameter combined with the evaluation function value into a higher rank group and a lower rank group configured from combinations of values of the initial state and the unknown parameter combined with the evaluation function value, estimates a probability density function for the higher rank group and a probability density function for the lower rank group, finds a value of the acquisition function from a ratio of the probability density function for the higher rank group and the probability density function for the lower rank group, and updates values of the initial state and the unknown parameter estimated to produce a minimum value of the evaluation function from the acquisition function value,
wherein
the actual measurement value is an actual measurement value obtained by digital image correlation, or is an actual measurement value obtained by observation of a surface profile change, and
wherein
the evaluation function representing errors between the actual measurement value and a value obtained from a result of the numerical computation and corresponding to the actual measurement value is defined based on a maximum likelihood estimation method or on Maximum Posterior Estimation.

2. The data assimilation device of claim 1, wherein the change in the specific environment is a change arising from press processing of the material.

3. The data assimilation device of claim 1 or 2, wherein the change in the specific environment is a change arising from sinter processing of the material.

**Patentansprüche**

1. Datenassimilationsvorrichtung, die Folgendes umfasst:

einen Erfassungsabschnitt, der einen tatsächlichen Messwert einer gemessenen Änderung in einer bestimmten Umgebung eines Datenassimilationsziels erfasst;

einen Berechnungsabschnitt, der einen vorläufigen Anfangszustand und einen vorläufigen Wert eines unbekannten Parameters verwendet, die sich auf das Datenassimilationsziel beziehen, um eine numerische Berechnung einer Änderung in der bestimmten Umgebung des Datenassimilationsziels durchzuführen; und

einen Aktualisierungsabschnitt, der einen Wert einer Bewertungsfunktion berechnet, die Fehler zwischen dem tatsächlichen Messwert und einem Wert repräsentiert, der aus einem Ergebnis der numerischen Berechnung erhalten wird und dem tatsächlichen Messwert entspricht, der eine Erfassungsfunktion aus einer Vielzahl von Kombinationen von Werten des Anfangszustands und des unbekannten Parameters in Kombination mit dem Bewertungsfunktionswert findet, und der Werte des Anfangszustands und des unbekannten Parameters aktualisiert, um einen Wert der Bewertungsfunktion auf der Grundlage eines Werts der Erfassungsfunktion zu minimieren, wobei in der Datenassimilationsvorrichtung:

der Berechnungsabschnitt Werte des Anfangszustands und des unbekannten Parameters, wie sie durch den Aktualisierungsabschnitt aktualisiert wurden, verwendet, um die numerische Berechnung erneut durchzuführen, und Werte des Anfangszustands und des unbekannten Parameters, die sich auf das Datenassimilationsziel beziehen, durch Wiederholung der numerischen Berechnung durch den Berechnungsabschnitt und der Aktualisierung durch den Aktualisierungsabschnitt geschätzt werden, wobei:

das Ziel der Datenassimilation ein Stoff oder ein Material ist; und

der unbekannte Parameter ein Wert einer physikalischen Eigenschaft des Stoffes oder des Materials ist, wobei

der Aktualisierungsabschnitt einen Wert der Bewertungsfunktion berechnet, der Fehler zwischen dem tatsächlichen Messwert und einem Wert darstellt, der aus einem Ergebnis der numerischen Berechnung erhalten wird und dem tatsächlichen Messwert entspricht, eine Vielzahl von Kombinationen von Werten des Anfangszustands und des unbekannten Parameters, die mit dem Bewertungsfunktionswert kombiniert sind, in eine Gruppe höheren Rangs und eine Gruppe niedrigeren Rangs sortiert, die aus Kombinationen von Werten des Anfangszustands und des unbekannten Parameters, die mit dem Bewertungsfunktionswert kombiniert sind, konfiguriert sind, eine Wahrscheinlichkeitsdichtefunktion für die Gruppe höheren Rangs und eine Wahrscheinlichkeitsdichtefunktion für die Gruppe niedrigeren Rangs schätzt, einen Wert der Erfassungsfunktion aus einem Verhältnis der Wahrscheinlichkeitsdichtefunktion für die Gruppe höheren Rangs und der Wahrscheinlichkeitsdichtefunktion für die Gruppe niedrigeren Rangs findet und Werte des Anfangszustands und des unbekannten Parameters aktualisiert, die geschätzt werden, um einen minimalen Wert der Bewertungsfunktion aus dem Erfassungsfunktionswert zu erzeugen, wobei

der tatsächliche Messwert ein tatsächlicher Messwert ist, der durch digitale Bildkorrelation erhalten wird, oder ein tatsächlicher Messwert ist, der durch Beobachtung einer Oberflächenprofiländerung erhalten wird, und wobei

die Bewertungsfunktion, die Fehler zwischen dem tatsächlichen Messwert und einem aus einem Ergebnis der numerischen Berechnung erhaltenen und dem tatsächlichen Messwert entsprechenden Wert darstellt, auf der Grundlage einer Maximum-Likelihood-Methode oder einer Maximum-a-posteriori-Schätzung definiert wird.

2. Die Datenassimilationsvorrichtung nach Anspruch 1, wobei die Änderung der spezifischen Umgebung eine Änderung ist, die sich aus der Pressverarbeitung des Materials ergibt.

3. Die Datenassimilationsvorrichtung nach Anspruch 1 oder 2, wobei die Änderung der spezifischen Umgebung eine Änderung ist, die sich aus der Sinterverarbeitung des Materials ergibt.

## Revendications

1. Dispositif d'assimilation de données comprenant :

une section d'acquisition qui acquiert une valeur de mesure réelle d'un changement mesuré dans un environnement spécifique d'une cible d'assimilation de données ;
une section de calcul qui utilise un état initial préliminaire et une valeur préliminaire d'un paramètre inconnu qui sont liés à la cible d'assimilation de données pour effectuer un calcul numérique d'un changement dans l'environnement spécifique de la cible d'assimilation de données ; et

une section de mise à jour qui calcule une valeur d'une fonction d'évaluation représentant les erreurs entre la valeur de mesure réelle et une valeur obtenue à partir d'un résultat du calcul numérique et correspondant à la valeur de mesure réelle, qui trouve une fonction d'acquisition à partir d'une pluralité de combinaisons de valeurs de l'état initial et du paramètre inconnu combinées avec la valeur de fonction d'évaluation, et qui met à jour les valeurs de l'état initial et le paramètre inconnu de manière à minimiser une valeur de la fonction d'évaluation sur la base d'une valeur de la fonction d'acquisition, dans lequel, dans le dispositif d'assimilation de données :

la section de calcul utilise les valeurs de l'état initial et le paramètre inconnu mis à jour par la section de mise à jour pour effectuer le calcul numérique à nouveau, et

les valeurs de l'état initial et le paramètre inconnu liés à la cible d'assimilation de données sont estimés en répétant le calcul numérique par la section de calcul et la mise à jour par la section de mise à jour, dans lequel :

la cible d'assimilation de données est une substance ou un matériau ; et

le paramètre inconnu est une valeur de propriété physique de la substance ou du matériau, dans lequel

la section de mise à jour calcule une valeur de la fonction d'évaluation représentant les erreurs entre la valeur de mesure réelle et une valeur obtenue à partir d'un résultat du calcul numérique et correspondant à la valeur de mesure réelle, trie une pluralité de combinaisons de valeurs de l'état initial et du paramètre inconnu combinées avec la valeur de fonction d'évaluation en un groupe de rang supérieur et un groupe de rang inférieur configurés à partir de combinaisons de valeurs de l'état initial et du paramètre inconnu combinées avec la valeur de fonction d'évaluation, estime une fonction de densité de probabilité pour le groupe de rang supérieur et une fonction de densité de probabilité pour le groupe de rang inférieur, trouve une valeur de la fonction d'acquisition à partir d'un rapport de la fonction de densité de probabilité pour le groupe de rang supérieur et de la fonction de densité de probabilité pour le groupe de rang inférieur, et met à jour les valeurs de l'état initial et le paramètre inconnu estimés pour produire une valeur minimale de la fonction d'évaluation à partir de la valeur de fonction d'acquisition, dans lequel

la valeur de mesure réelle est une valeur de mesure réelle obtenue par corrélation d'images numériques, ou est une valeur de mesure réelle obtenue par observation d'un changement de profil de surface, et dans lequel

la fonction d'évaluation représentant les erreurs entre la valeur de mesure réelle et une valeur obtenue à partir d'un résultat du calcul numérique et correspondant à la valeur de mesure réelle est définie sur la base d'un procédé d'estimation du maximum de vraisemblance ou d'une estimation a posteriori maximale.

2. Dispositif d'assimilation de données selon la revendication 1, dans lequel le changement dans l'environnement spécifique est un changement résultant d'un traitement par presse du matériau.

3. Dispositif d'assimilation de données selon la revendication 1 ou 2, dans lequel le changement dans l'environnement spécifique est un changement résultant d'un traitement par frittage du matériau.

# FIG.1

# FIG.2

ACQUISITION SECTION — 101

COMPUTATION SECTION — 102

UPDATE SECTION — 103

ITERATION DETERMINATION SECTION — 104

10

## FIG.3

START

ACQUIRE EXPERIMENTAL DATA — S100

SET INITIAL VALUES FOR INITIAL STATE AND UNKNOWN PARAMETER — S102

EXECUTE SIMULATION $n$ TIMES — S104

COMPUTE ERROR FUNCTION REPRESENTING ERROR TO EXPERIMENTAL DATA — S106

COMPUTE INITIAL STATE AND PARAMETER TO MINIMIZE ERROR FUNCTION — S108

S110 ITERATION FINISHED?

N

S112 UPDATE INITIAL STATE AND UNKNOWN PARAMETER

S114 EXECUTE SIMULATION

Y

OUTPUT OPTIMUM INITIAL STATE AND UNKNOWN PARAMETER VALUE — S116

END

# FIG.4

# FIG.5

(a)                    (b)                    (c)

# FIG.6

# FIG.7

EXPERIMENTATION (ONCE OK)
ASSUMING ACTUAL PRESS PROCESSING

LEFT CAMERA IMAGE

RIGHT CAMERA IMAGE

PUNCH

TEST PIECE
(ALUMINUM ALLOY)

DIGITAL IMAGE CORRELATION

[mm]
4.44
3.00
2.00
1.00
0.00
-1.00
-2.00
-3.00
-4.00
-4.65

DEFORMATION ARISING IN TEST PIECE
(EXPERIMENTAL DATA)

# FIG.8

TEST PIECE (ALUMINUM ALLOY)

PUNCH

SIMULATION SAME CONDITIONS
AS EXPERIMENTATION

# FIG.9

# FIG.10

0 s 10 s 20 s

30 s 40 s 50 s

# FIG.11

NUMBER OF TIMES EVALUATION
FUNCTION MINIMIZATION COMPUTED

# FIG.12

# FIG.13

FIG.14

## REFERENCES CITED IN THE DESCRIPTION

**Non-patent literature cited in the description**

- **TOMOYUKI HIGUCHI** ; **GENTA UENO** ; **SHINYA NAKANO** ; **KAZUYUKI NAKAMURA** ; **RYOU YOSHIDA**. Introduction to Data Assimilation - Next Generation Simulation Technology. Asakura Publishing Co., Ltd, 2011
- **TOSHIYUKI AWAJI** ; **MASAFUMI KAMACHI** ; **MOTOMI IKEDA** ; **YOICHI ISHIKAWA**. Data Assimilation: Innovation in Merging Observations and Experimentation with Models. Kyoto University Press, 2009
- Challenges and Prospects of Ensemble Forecasting for Probabilistic Weather Forecasting. Japan Meteorological Agency, 2016, vol. 62
- **SHIRAIWA TAKAYUKI et al.** Data Assimilation in the Welding Process for Analysis of Weld Toe Geometry and Heat Source Model. *ISIJ INTERNATIONAL*, 15 June 2020, vol. 60, ISSN 0915-1559, 1301-1311, https://www.jstage.jst.go.jp/article/isijinternational/60/6/60 ISIJINT-2019-720/_article/-char/ja
- **ANONYMOUS**. *Tree Parzen Estimator in Bayesian Optimization for Hyperparameter Tuning*, 31 December 2020, URL:https://albertuskelvin.github.io/posts/2020/12/tree-structured- parzen-estimator-bayesian-optimization/
- Gaussian Processes for history-matching: application to an unconventional gas reservoir. **HAMDI HAMIDREZA et al.** COMPUTATIONAL GEOSCIENCES. BALTZER SIENCE PUBLISHERS, 21 January 2017, vol. 21, 267-287
- **MIYOSHI TAKEMASA**. *Advancing Data Assimilationas a Science Hub - Weather prediction and beyond*, 11 July 2018, https://www. dataia. eu/sites/default/files/DATAIA_JST_International_Symposium/13_20180711miyoshi.pdf
- **CHAPELIER M et al.** Free-Form Deformation Digital Image Correlation (FFD-DIC): A non-invasive spline regularization for arbitrary finite element measurements. *COMPUTER METHODS IN APPLIED MECHANICS AND ENGINEERING*, 22 June 2021, vol. 384, ISSN 0045-7825
- **ISHII AKIMITSU et al.** Estimation of solid-state sintering and material parameters using phase-field modeling and ensemble four-dimensional variational method. *MODELLING AND SIMULATION IN MATERIALS SCIENCE AND ENGINEERING*, 27 July 2021, vol. 29 (6), ISSN 0965-0393, 065012, https://iopscience.iop.org/article/10.1088/1361-651X/ac13cd/ pdf
- **K. SASAKI** ; **A. YAMANAKA** ; **H. NAGAO** ; **S. ITO**. Data assimilation for phase-field models based on the ensemble Kalman filter. *Computational Materials Science*, 2018, vol. 141, 141-152
- **F. BARLAT** ; **J. C. BREM** ; **J. W. YOON** ; **K. CHUNG** ; **R. E. DICK** ; **D. J. LEGE** ; **F. POURBOGHRAT** ; **S. H. CHOI** ; **E. CHU**. Plane stress yield function for aluminum alloy sheets - part 1: theory. *International Journal of Plasticity*, 2003, vol. 19 (9), 1297-1319